# EUROPEAN PATENT APPLICATION

(11) **EP 4 831 033 A1**
(43) Date of publication of application: **28.10.2026**
(21) Application number: 26173347.1
(22) Date of filing: 20.04.2026
(51) Int. Cl.: B61L 23/02, B60T 8/17, B60T 17/22, B61K 9/06, B61L 15/00, B61L 27/57

(54) **SYSTEM AND METHOD FOR ANALYSING VEHICULAR AXLE DYNAMICS**

(30) Priority: 21.04.2025 US 202519184815
(71) Applicant: Transportation IP Holdings, LLC, Norwalk, CT 06851 (US)
(72) Inventor: DAS, Sumit Kumar, 562125 Bangalore (IN); BAROLE, Somnath Shivrajappa, 562125 Bangalore (IN); KUMAR, Karredla Vasudev Durga Ganesh, 500058 Hyderabad (IN)
(74) Representative: K&L Gates LLP

(57) **Abstract**

Disclosed are a method and system for analyzing vehicular axle dynamics by assessing tractive force data from multiple axles. The method involves constructing a correlation matrix for unique axle combinations and calculating correlation values. These values are compared against a determined threshold to identify potential issues. The system includes sensors to measure tractive force and temperature, converting signals into axle data. A control circuit analyzes this data, creating a correlation matrix and assessing correlation values. If values fall below the threshold, further analysis is required. The system can utilize thermal sensors, including infrared, to enhance accuracy. The method also considers temperature thresholds to identify issues, ensuring monitoring of axle performance. This approach aims to improve vehicle safety and maintenance by providing early detection of axle-related problems. Based upon detecting such potential issue, changing operation of a propulsion or braking system of the vehicle, and designating an axle for inspection.

## Description

### BACKGROUND

### Technical Field

The subject matter described herein relates to systems and methods for controlling the maintenance of vehicles.

### Discussion of Art

Locomotive alert codes with acronyms like MBDE, UBDE, and GCASE are typically used by specific manufacturers or railroad operators to denote particular systems or error codes. MBDE (Microprocessor-Based Diagnostic Equipment) refers to a system on a locomotive that uses a microprocessor to monitor and diagnose the locomotive's systems. It helps in identifying faults in real-time and logs issues for maintenance crews to review. UBDE (Universal Brake Diagnostic Equipment) is often related to the diagnostic systems that monitor brake performance. This system is essential for ensuring the brakes are functioning correctly and safely. Alerts here may indicate issues in brake control or malfunction. GCASE (Global Common Alarm System Equipment) generally refers to a centralized system that collects and reports alarms from various subsystems on the locomotive. It provides a single interface for monitoring alerts across different systems (engine, electrical, braking) to help operators address issues efficiently.

Currently alerts on locomotives for MBDE, UBDE, and GCase, among others, are based on temperature values captured via infrared imaging for those respective components. However, infrared effectiveness metric for certain locomotives showed that there is high removal rate for MBDE and UBDE when there is no damage. This is leading to unnecessary shopping of the locomotives interrupting the customer operations. In the rail industry, "shopping" a locomotive refers to sending it to a maintenance facility (often called a "shop") for repairs, inspection, or scheduled servicing. When alerts like MBDE, UBDE, or GCASE indicate issues, "shopping" the locomotive involves taking it out of service and transporting it to a repair shop where technicians can thoroughly investigate and resolve the problems.

The shopping process may include diagnosis - analyzing the alert codes and performing inspections to understand the exact nature of the issue; repairs - conducting necessary mechanical, electrical, or brake system repairs based on the alerts; testing - running tests to ensure the repairs were successful and that all systems function correctly; or documentation - logging the repairs and inspections for record-keeping and regulatory compliance. Shopping a locomotive is crucial for ensuring safety, preventing breakdowns, and maintaining operational efficiency.

### SUMMARY

The current vehicle control systems for locomotives rely on infrared imaging to predict axle issues, leading to a high rate of unnecessary removals when no actual damage exists. This results in disruptions to customer operations.

In a first embodiment, a method is disclosed for analyzing vehicular axle dynamics. The method includes obtaining axle data associated with each axle of a plurality of axles of a vehicle, the axle data being indicative of tractive force. The axel data is used to construct a correlation matrix that includes each unique combination of distinct axles. Each unique combination includes first axle data from a first axle and second axle data from a second axle. An axle correlation value is calculated for each unique axle combination. The axle correlation values for each unique axle combination are compared the with a determined threshold. An assessment of whether any axle correlation value for any axle within the plurality of axles falls below the determined threshold, indicates a potential issue requiring further analysis or action. Based upon detecting such potential issue, executing at least one of changing operation of at least one of a propulsion or braking system of the vehicle or designating an axle for subsequent inspection or maintenance based on the indication of the potential issue.

In a second embodiment, a system is disclosed for analyzing vehicular axle dynamics. The system includes a sensor, a converter circuit, and a control circuit. The sensor generates a signal indicative of a tractive force of each axle of a plurality of axles of a vehicle. The tractive force is caused by friction between the axle and a contact surface of a wheel or bearing. The converter converts the signal into axle data, which is stored in a first memory. The control circuit is coupled to the first memory and a second memory, in which the second memory stores instructions executable by the control circuit to cause the control circuit to fetch the axle data from the first memory. The control circuit constructs a correlation matrix for each unique combination of two distinct axles, in which each unique combination includes first axle data from a first axle and second axle data from a second axle. The control circuit calculates an axle correlation value for each unique axle combination, compares the axle correlation values for each unique axle combination with a determined threshold, and assesses whether any axle correlation value for any axle within the plurality of axles falls below the determined threshold, which indicates a potential issue requiring further analysis or action. Based upon detecting such potential issue, execute at least one of change operation of at least one of a propulsion or braking system of the vehicle or designate an axle for subsequent inspection or maintenance based on the indication of the potential issue.

In a third embodiment, a method is disclosed for analyzing vehicular axle dynamics. The method includes obtaining temperature values associated with each axle of a plurality of axles of a vehicle. Whether the temperature value of each axle exceeds a temperature threshold is determined. Axle data associated with each axle of a plurality of axles of a vehicle is obtained. The axle data being indicative of tractive force. A correlation matrix that includes each unique combination of distinct axles is constructed. Each unique combination includes first axle data from a first axle and second axle data from a second axle. An axle correlation value for each unique axle combination is calculated and the axle correlation values are compared for each unique axle combination with a determined threshold. Based on the temperature value of an axle exceeding the temperature threshold, the control circuit assesses whether any axle correlation value for any axle exceeding the temperature threshold falls below the determined threshold, indicating a potential issue requiring further analysis or action. Based upon detecting such potential issue, executing at least one of changing operation of at least one of a propulsion or braking system of the vehicle or designating an axle for subsequent inspection or maintenance based on the indication of the potential issue.

### BRIEF DESCRIPTION OF THE DRAWINGS

The subject matter may be understood from reading the following description of nonlimiting embodiments, with reference to the attached drawings, wherein below:
FIG. 1A illustrates a vehicle system including a sensor system onboard vehicle system according to one embodiment of the present disclosure.
FIG. 1B illustrates an axle assembly of the vehicle system of FIG. 1A according to one embodiment of the present disclosure.
FIG. 2 illustrates a method for analyzing vehicular axle dynamics, according to one embodiment of the present disclosure.
FIG. 3 illustrates a method for analyzing vehicular axle dynamics, according to one embodiment of the present disclosure.
FIGs. 4A-4B illustrate infrared data that may be associated with six axles, according to one embodiment of the present disclosure.
FIG. 5 illustrates a correlation matrix of the combination of axles, according to one embodiment of the present disclosure.
FIG. 6 illustrates a confusion matrix, according to one embodiment of the present disclosure.

### DETAILED DESCRIPTION

In various embodiments, the disclosure introduces a method that correlates tractive effort of vehicle structures to improve accuracy of failure detection and reduce unnecessary vehicle repairs. The vehicle structures may include axles among other structural components. The method may include monitoring structural parameters associated with tractive effort. in various embodiments combining the monitored structural parameters with tractive effort correlation analysis. By calculating correlation values between the structural parameters and verifying predictions, the method improves accuracy in failure detection and reduces unnecessary vehicle repairs. Monitoring structural parameters may include monitoring temperature, physical deformation, and wear of stationary and nonstationary components such as vehicle axles and wheels.

Various aspects of the present disclosure relate to vehicle control systems and methods for analyzing vehicular axle dynamics and predicting axle issues. Currently, locomotives send alerts for MBDE, UBDE, GCase, etc. based on temperature values of captured via infrared imaging for those respective components. However, infrared effectiveness metric for certain locomotives showed that there is high removal rate for MBDE and UBDE when there is no damage (e.g., where the axle does not have an issue requiring it to be removed). This is leading to unnecessary shopping of the locomotives interrupting the customer operations. This disclosure addresses the inaccuracy of existing methods and describes a new method to be used along with infrared imaging to improve the accuracy of failure prediction.

For the true failure cases, correlation coefficient of tractive efforts for the failed axle with respect to other axles has comparatively lower values. This disclosure is directed to determining correlation values for tractive efforts between all the axles is calculated and implementing a logic to cross verify if the predicted axle from infrared imaging is in the calculated two (or other value) minimum correlation values. If the predicted axle from infrared imaging has minimum or next minimum tractive effort correlation values, then it is considered as true flag in the disclosed method. This disclosure improves accuracy and reduces unnecessary locomotive shop visits and provides smooth customer operations.

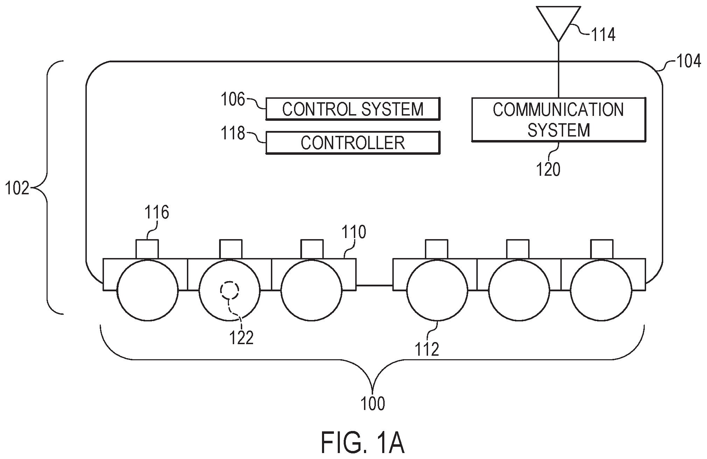

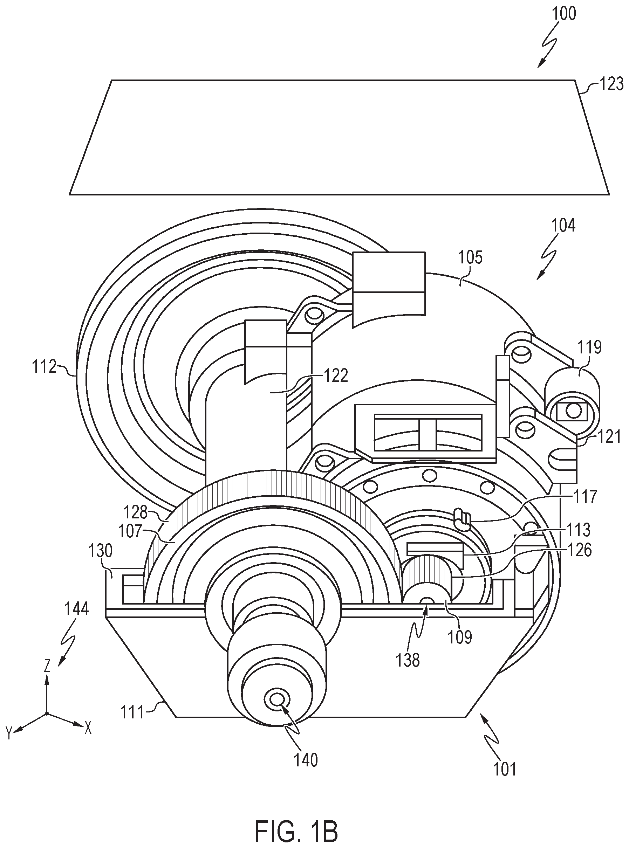

FIG. 1 illustrates a sensor system 100 onboard a vehicle system 102 according to one embodiment. The vehicle system 102 shown in FIG. 1 includes a single vehicle 104, but optionally may represent two or more vehicles that travel together along a route. The vehicles may be mechanically coupled with each other to travel together as a vehicle consist or may be mechanically decoupled but communicate with each other to coordinate movements of the vehicles and travel together as a convoy along the route. The vehicle can represent a propulsion-generating vehicle, such as a locomotive, automobile, truck, marine vessel, or the like. Optionally, the vehicle can represent a non-propulsion-generating vehicle, such as a rail car, trailer, barge, or the like.

The components of the vehicle and/or sensor system may be operably connected by one or more wired and/or wireless connections. The vehicle includes a control system 106 that operates to control operations of the vehicle and/or vehicle system. The control system 106 can include or represent hardware circuitry that includes and/or is connected with one or more control circuits (e.g., processors, microprocessors, field programmable gate arrays, integrated circuits, controllers, microcontrollers, or other electronic logic-based devices). The control system 106 may receive signals from an input device 108, such as one or more throttles, pedals, buttons, switches, microphones, touchscreen, keyboards, or the like. An operator of the vehicle may actuate the input device to control operations, such as movement, of the vehicle via the control system. In response to receiving the input from the operator, the control system may communicate signals to one or more components of the vehicle or vehicle system to implement the input. For example, the vehicle may include propulsion systems 110 having traction motors, gear boxes, axles 122, wheels 112, etc., that generate tractive effort or torque to rotate the axles and wheels of the vehicle to propel the vehicle system. The control system can communicate signals to the traction motors to control the torque generated by the traction motors, the speed at which the traction motors operate, etc., to control movement of the axles and wheels of the vehicle or vehicle system. In another example, the control system can communicate signals to brakes or other components to control operations of the vehicle or vehicle system.

Although not shown in FIG. 1, the vehicle can include an output device that provides output to an operator of the vehicle or the vehicle system, to an off-board location, or to one or more other components of the vehicle or vehicle system. The output device can represent a display, a touchscreen, a speaker, a wireless transceiver, etc. The output device can receive signals from the control system that direct the output device to present the output to the operator or other location. A communication system 120 represents hardware circuitry that communicates data signals with one or more locations or systems located off-board the vehicle. The communication system can include transceiver circuitry, such as one or more antennas 114, routers, modems, radios, and the like, for communicating data signals. For example, the output device may provide an indication that an axle may have an issue.

The sensor system includes several sensors 116. The sensors can represent a variety of devices that monitor characteristics of the vehicle system and/or the environment around the vehicle system. For example, the sensors may include temperature sensors (e.g., sensors that output data representative of temperatures of the vehicles and/or environment, such as hot box detectors, infrared cameras, etc.), vibration sensors (e.g., sensors that output data representative of movement in one or more directions, such as accelerometers), pressure sensors (e.g., sensors that output data representative of fluid pressure, such as air pressure in tires of the vehicles, pressures of oil or other lubricants in gear boxes and/or engines, etc.), fluid sensors (e.g., sensors that output data representative of an oil or other fluid level, or how much fluid, oil or other lubricant is in gear boxes, engines, etc.), positioning sensors (e.g., sensors that output data representative of geographic or other locations, such as a global positioning system receiver), speed sensors (e.g., sensors that output data representative of how rapidly a vehicle is moving, how rapidly a wheel and/or axle is rotating, etc.), acoustic sensors (e.g., sensors that output data representative of sounds, such as microphones), optic sensors (e.g., sensors that output data representative of images and/or videos, such as cameras, infrared detectors), electromagnetic sensors (e.g., sensors that obtain and/or output data using electromagnetic waves, such as radio frequency identification interrogators or tags), etc. The sensors 116 may represent different types of sensors. The sensors may be disposed on the axles of the vehicle.

A control circuit (controller) 118 optionally may be included in the sensor system. The control circuit can represent hardware circuitry that includes and/or is connected with one or more control circuits (e.g., processors, microprocessors, field programmable gate arrays, integrated circuits, controllers, microcontrollers, or other electronic logic-based devices) that communicate with the sensors to receive the data from the sensors. The control circuit may be operably connected with the sensors to operate as a gateway for the sensors to communicate sensed data with the control system. The control circuit may communicate some or all of the data to the control system. The processing of data or other signals that are provided or output by the sensors as described herein may be performed by the control circuit, by the control system, and/or a combination of the control circuit and/or control system. In one embodiment, the control circuit may be disposed off-board of the vehicle and/or the vehicle system to perform the signal processing.

The sensor system may include a sensor to generate a signal indicative of a tractive force of each axle of a plurality of axles of a vehicle. The tractive force is caused by friction between the axle and a contact surface of a wheel or bearing. The tractive force may be calculated based on the amount of energy the tractive motor of each axle pulls.

The control circuit may include a converter circuit to convert the signal into axle data. For example, this may be an analog-to-digital converter or the control circuit may convert the signal into axle data upon receipt of the axle data. The axle data may be stored in a first memory.

The control circuit may include a processor coupled to the first memory and a second memory. The second memory may store instructions executable by the processor to cause the processor to fetch the axle data from the first memory. The processor may construct a correlation matrix for each unique combination of two distinct axles, wherein each unique combination includes first axle data from a first axle and second axle data from a second axle. The processor my calculate an axle correlation value for each unique axle combination. The processor may compare the axle correlation values for each unique axle combination with a determined threshold; and assess whether any axle correlation value for any axle within the plurality of axles falls below the determined threshold, indicating a potential issue requiring further analysis or action. Based upon detecting such potential issue, the control circuit may, change at least one of the operation of a propulsion or braking system of the vehicle. The control circuit may designate an axle for subsequent inspection or maintenance based on the indication of the potential issue

Sensors may be disposed on at least one of the vehicles, the axle, a wayside device remotely located from the vehicle, or a combination thereof. For example, the sensor to measure tractive effort may be on the vehicle. For example, the sensor to measure axle temperature may be disposed on a wayside device and/or on the vehicle. The temperature sensor may be disposed on the vehicle. The temperature sensor may be disposed on the wayside device.

The sensor may be a thermal sensor to measure temperature changes on the axle correlated to the tractive force on the axle. The thermal sensor may be an infrared sensor, and the axle data may be an infrared imaging data. The thermal sensor may be disposed on the vehicle or a wayside device.

The axle includes a plurality of components and the axle data includes data for at least one of the plurality of components. At least one of the plurality of axle components may include GCase, MBDE, UBDE, as described above, as well as MBNon (Main Beam Non-metallic, which refers to to non-metallic components of a main beam structural element in railway systems), MCase (Metal Case, which refers to a protective housing for sensitive components like sensors, electronics, or signaling equipment), and UBNon (Under Beam Non-metallic, which refers to non-metallic components under a beam structural component of a railway system). The axle data may include data for each of the components.

FIG. 1B shows an embodiment of an assembly of an axle of the vehicle 102. An embodiment of the assembly includes a traction motor 103 of a vehicle such as an electric or diesel-electric locomotive and a wheel axle 122 rotatably captured between the pair of vehicle wheels 112 (one wheel is not shown). Each axle is coupled to two wheels. The vehicle may comprise any number of axles.

The motor embodiment includes a motor housing 105 and a link 119 coupled to the motor housing via mount 121. At one end of the motor, the motor rotor is drivingly coupled to the axle by means of suitable torque amplifying gearing comprising a relatively small diameter pinion gear 109 on the motor shaft and a relatively large diameter axle gear 107 on the axle. The pinion gear is adjacent to the bearing cap 113, which is fastened to the pinion plate 117 encasing of the motor. The pinion gear 109 and pinion teeth 126 rotate the axle gear 107 via axle gear teeth 128. During the operation of the gear set, the traction motor drives the pinion gear by rotating the pinion coupled to the pinion gear about the axis of rotation 138. Due to the engagement of the gear teeth, the pinion gear rotates the axle gear about an axis of rotation 140. The axle gear is coupled to the axle that rotates with the axle gear. The axle of the axle gear is coupled to a first wheel and a second wheel that rotates with the axle. The wheels engage a surface to move the machine. In one embodiment, the first wheel and the second wheel are locomotive wheels. An axis system 144 is given in FIG. 1B.

An output of the gear set is housed in a gearcase 101 consisting essentially of two parts. In one embodiment, there is a first case element 111 and a second case element 123, shown schematically, which is shaped to mate the first case element. In one embodiment, the first case element is a bottom case element and the second case element is a top case element. A gearcase flange 130 is depicted along the perimeter of the first case element. During gearcase assembly, the two gearcase elements make face sharing contact at the flange and a plurality of fasteners join the gearcase closed around the gear set.

During operation, the axle bearings may fail and cause the axle to heat up. The axles of the vehicle may be monitored to ensure that the temperature of each of the axles does not exceed a threshold and does not cause a failure.

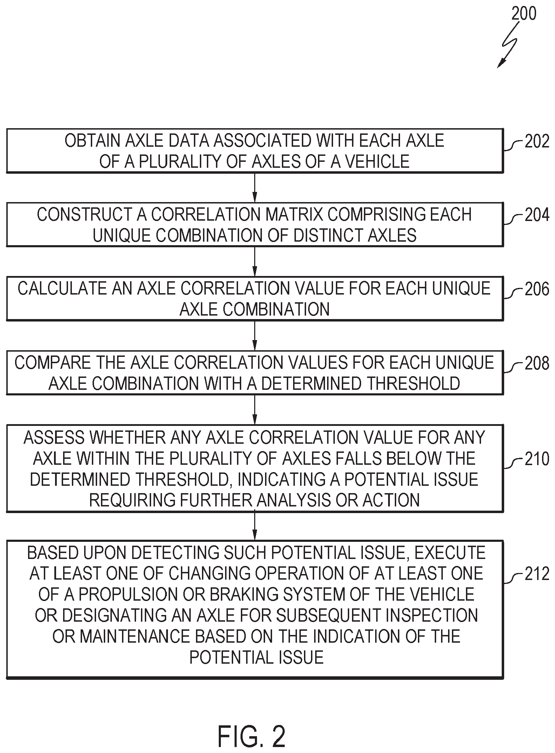

FIG. 2 illustrates one embodiment of a method 200 for analyzing vehicular axle dynamics, according to one embodiment of the present disclosure. In various embodiments, the method includes obtaining 202 axle data associated with each axle of a plurality of axles of a vehicle, constructing 204 a correlation matrix comprising each unique combination of distinct axles, calculating 206 an axle correlation value for each unique axle combination, comparing 208 the axle correlation values for each unique axle combination with a determined threshold, and assessing 210 whether any axle correlation value for any axle within the plurality of axles falls below the determined threshold, indicating a potential issue requiring further analysis or action. In some embodiments, the method includes, based upon detecting such potential issue, executing 212 at least one of changing the operation of at least one of a propulsion or braking system of the vehicle or designating an axle for subsequent inspection or maintenance based on the indication of the potential issue.

Upon detecting such potential issue, the operation of the propulsion system, braking system, or both may be changed and/or the axle may be designated for inspection or maintenance.

In one embodiment, designating an axle for inspection or maintenance includes storing the data for the axles designated for maintenance and alerting an off board server of the axle for maintenance or inspection.

In some embodiments, changing operation of a propulsion or braking system may include slowing down the vehicle based on potential axle failure. For example, the controller may cause the vehicle to engage the braking system to slow down the vehicle. For example, the controller may cause the traction motor coupled to the axle indicating potential failure to slow down or stop.

In one embodiment, the method may be implemented by an embodiment of the controller (control circuit) and sensors of the vehicle and/or wayside device as described in FIG. 1. The control circuit may obtain axle data associated with each axle of a plurality of axles of a vehicle. The axle data may be indicative of tractive force. The axle data obtained by the control circuit may include the amount of energy delivered to each of the traction motors for each axle. The amount of energy delivered to the traction motors may be used to determine the tractive effort of each axle. The amount of energy may be an electrical current consumed by the traction motor of each axle. A sensor may transmit the axle data to the control circuit. The control circuit may obtain axle data from sensors on the vehicle or from sensors on wayside detectors.

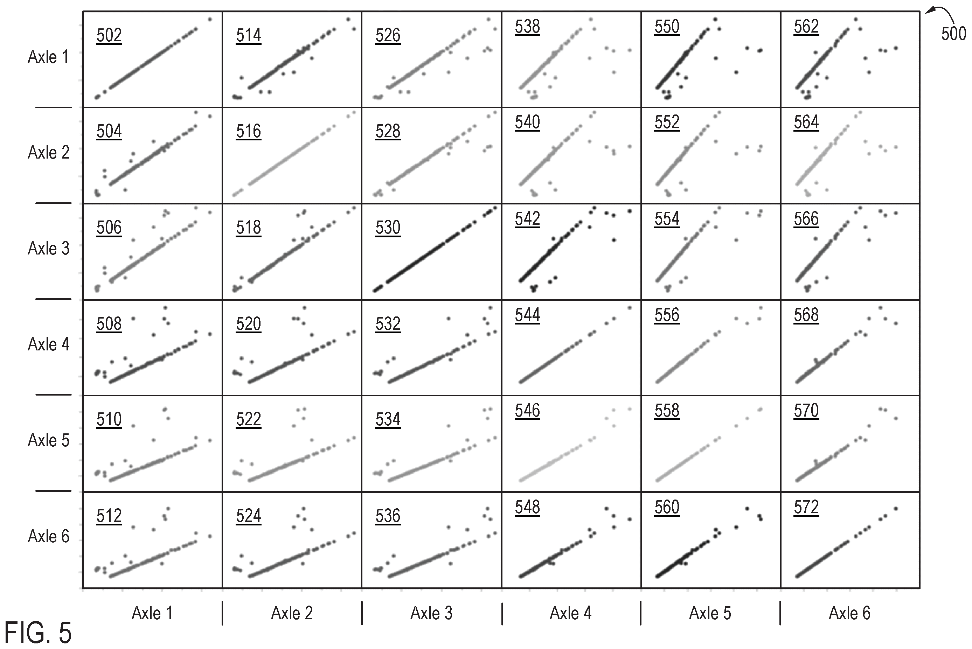

In one embodiment, the control circuit may construct a correlation matrix comprising each unique combination of distinct axles. Each unique combination includes first axle data from a first axle and second axle data from a second axle. A detailed description of the correlation matrix is provided below with reference to FIG. 5.

Referring back to FIG. 2, the control circuit may calculate an axle correlation value for each unique axle combination. The correlation value is indicative of the relationship between the two sets of axle data. The relationship may be linear or non-linear. For example, for each unique axle combination a correlation value is determined by at least one of Pearson correlation, Kendall rank correlation, Spearman correlation, the Point-Biserial correlation, or similar correlation calculations.

In one embodiment, the control circuit may compare the axle correlation values for each unique axle combination with a determined threshold. The axle correlation value may be compared with a threshold.

The determined threshold may be either a specific correlation value or a set number of the lowest correlation values within the correlation matrix. For instance, the correlation value may be a threshold value indicating a potential issue with an axle. Alternatively, the threshold could be defined by the lowest one or two correlation values, which are considered below the determined threshold. Any number of correlation values can be utilized. The control circuit may assess whether any axle correlation value for any axle within the plurality of axles falls below the determined threshold, indicating a potential issue requiring further analysis or action. A potential issue may be one of axle failure or bearing failure and could result into locked axle.

An axle indicating failure or a bearing indicating failure may be designated for inspection or maintenance. The controller may change operation of a propulsion or braking system of the vehicle. In some embodiments, changing operation of a propulsion or braking system may include slowing down the vehicle based on potential axle failure. For example, the controller may cause the vehicle to engage the braking system to slow down the vehicle or stop the vehicle. For example, the controller may cause the traction motor coupled to the axle indicating potential failure to slow down or stop by transmitting less power to the traction motor.

For example, if the threshold is based on the correlation value, it will be a numerical figure. If the axle's correlation value falls below this threshold, the axles may be flagged as indicating a potential issue. For example, if the threshold is based on the number of lowest correlation values, these values may indicate that the axles could be flagged for a potential issue. For example, if the threshold is the number of lowest correlation values, then the lowest correlation values are indicative that those axles may be flagged as indicating a potential issue.

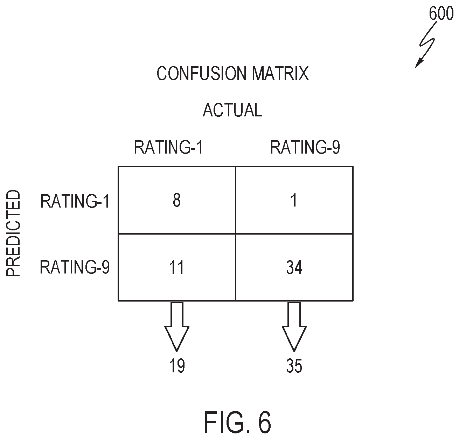

The method may also include identifying an issue with the axle and cross-verifying the assessment results to ensure accuracy. As illustrated in FIG. 6, a confusion matrix can be created to evaluate the accuracy of the results.

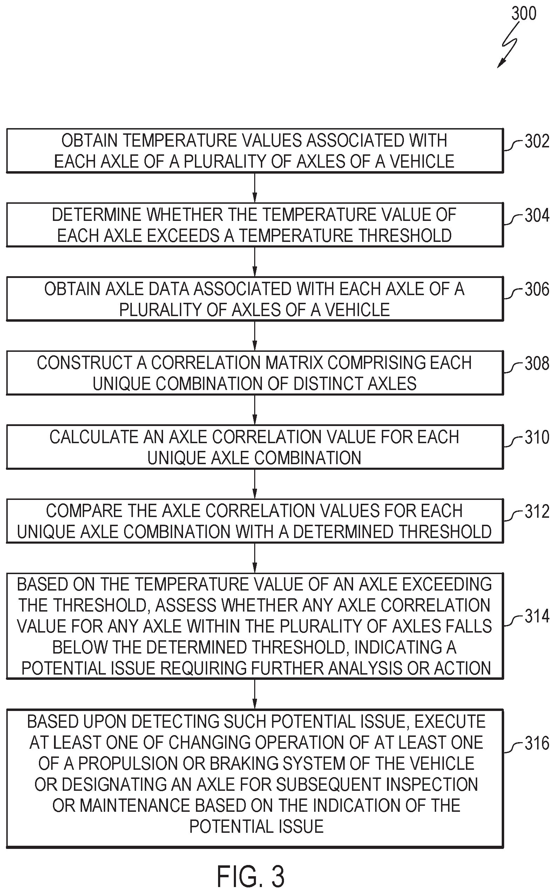

FIG. 3 illustrates a method 300 for analyzing vehicular axle dynamics, according to one embodiment of the present disclosure. The method may include obtaining 302 temperature values associated with each axle of a plurality of axles of a vehicle, determining 304 whether the temperature value of each axle exceeds a temperature threshold, obtaining 306 axle data associated with each axle of a plurality of axles of a vehicle, wherein the axle data is indicative of tractive force, constructing 308 a correlation matrix comprising each unique combination of distinct axles, calculating 310 an axle correlation value for each unique axle combination, comparing 312 the axle correlation values for each unique axle combination with a determined threshold, and based on the temperature value of an axle exceeding the temperature threshold, assessing 314 whether any axle correlation value for any axle exceeding the temperature threshold falls below the determined threshold, indicating a potential issue requiring further analysis or action. In some embodiments, based upon detecting such potential issue, the method may include at least one of changing operation of a propulsion or braking system of the vehicle, and designating an axle for subsequent inspection or maintenance based on the indication of the potential issue. In some embodiments, the method includes, based upon detecting such potential issue, executing 316 at least one of changing the operation of at least one of a propulsion or braking system of the vehicle or designating an axle for subsequent inspection or maintenance based on the indication of the potential issue.

Upon detecting such potential issue, the operation of the propulsion system, braking system, or both may be changed and/or the axle may be designated for inspection or maintenance.

In one embodiment, designating an axle for inspection or maintenance includes storing the data for the axles designated for maintenance and alerting an off board server of the axle for maintenance or inspection.

In some embodiments, changing operation of a propulsion or braking system may include slowing down the vehicle based on potential axle failure. For example, the controller may cause the vehicle to engage the braking system to slow down the vehicle. For example, the controller may cause the traction motor coupled to the axle indicating potential failure to slow down or stop.

The method may be implemented by an embodiment of the controller and sensor system of the vehicle as described in FIG. 1.

In one embodiment, the control circuit may obtain temperature values associated with each axle of a plurality of axles of a vehicle. The sensors may include infrared sensors to determine the temperature of the axles. The sensors may send the data to the control circuit. The control circuit may determine the temperature of the axles based on the sensor data.

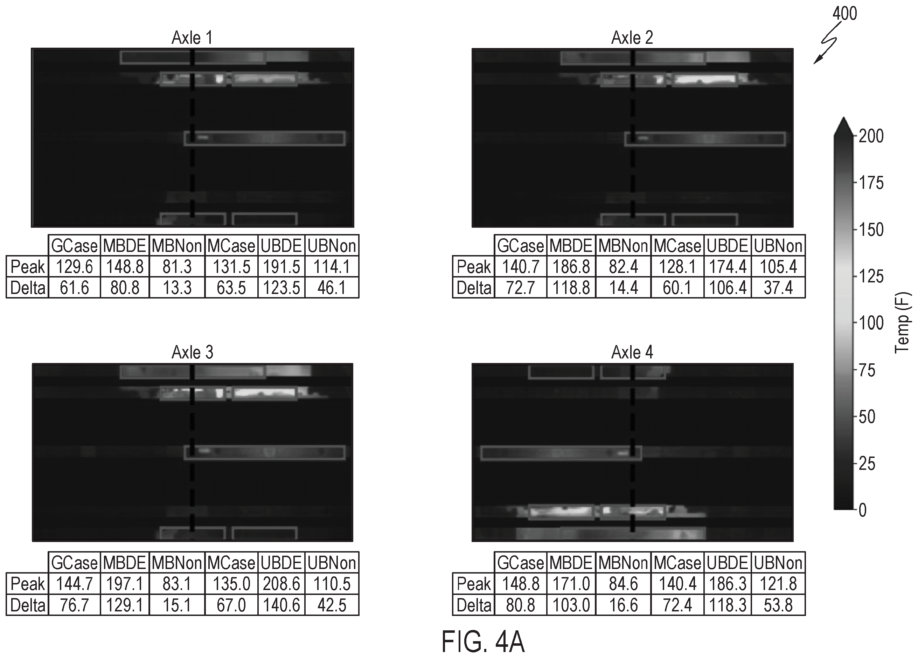

FIGs. 4A-4B illustrate one embodiment of infrared data 400 that may be associated with six axles. In other embodiments, there may be more or less axles associated with the vehicle or vehicle system. The infrared data is indicative of the heat generated at different locations of the axle. The control circuit may determine the temperature from the infrared data.

In one embodiment, the control circuit may determine whether the temperature value of each axle exceeds a temperature threshold. The control circuit may compare the temperature values of each axle to a temperature threshold. The determined threshold may be a temperature value indicative of potential failure of the axle.

In one embodiment, the control circuit may obtain axle data associated with each axle of a plurality of axles of a vehicle. The axle data may be indicative of tractive force. The control circuit may receive the axle data, such as the amount of energy to each of the traction motors for each axle. The amount of energy of the traction motors may be used to determine the tractive effort of each axle. The amount of energy may be the current used by the traction motor. A sensor may transmit the axle data to the control circuit.

In one embodiment, the control circuit may construct a correlation matrix comprising each unique combination of distinct axles. Each unique combination includes first axle data from a first axle and second axle data from a second axle. A detailed description of the correlation matrix is provided below with reference to FIG. 5.

In one embodiment, the control circuit may calculate an axle correlation value for each unique axle combination. The correlation value is indicative of the relationship between the two sets of axle data. The relationship may be linear or non-linear. For example, for each unique axle combination a correlation value is determined by at least one of Pearson correlation, Kendall rank correlation, Spearman correlation, the Point-Biserial correlation, or similar correlation calculations.

In one embodiment, the control circuit may compare the axle correlation values for each unique axle combination with a determined threshold. The axle correlation value may be compared with a threshold.

The determined threshold may be either a specific correlation value or a set number of the lowest correlation values within the correlation matrix. For instance, the correlation value may be a threshold value indicating a potential issue with an axle. Alternatively, the threshold could be defined by the lowest one or two correlation values, which are considered below the determined threshold. Any number of correlation values can be utilized.

Based on the temperature value of an axle exceeding the threshold, the control circuit may assess whether any axle correlation value for any axle within the plurality of axles falls below the determined threshold, indicating a potential issue requiring further analysis or action. A potential issue may be one of flat spots on the wheels, wheel wear, or damage to the wheel or axle. Flat spots on the wheels occur due to uneven wear on the wheels.

For example, if the threshold is based on the correlation value, it will be a numerical figure. If the axle's correlation value falls below this threshold, the axles may be flagged as indicating a potential issue. For example, if the threshold is based on the number of lowest correlation values, these values may indicate that the axles could be flagged for a potential issue.

For example, if the temperature value of the axle exceeds a threshold and the determined threshold is the number of lowest correlation values, then the lowest correlation values are indicative that those axles may be flagged as indicating a potential issue.

For example, the control circuit may determine the axle has an issue. The control circuit may cross-verify results of the axle assessment and determination to determine if the assessment was accurate. FIG. 6 illustrates a detailed description of a confusion matrix that may be created to assess the accuracy of the results.

For example, the control circuit may receive traction effort data in real-time as the vehicle is moving along a route. The analysis of the traction effort may affect the control of the vehicle. The control circuit may change operation of the propulsion or braking system of the vehicle. For example, if the axle bearing heats up beyond a threshold, the control circuit may operate the braking system and cause the vehicle to slow down or stop. Based on the likelihood of failure of the axle, the control circuit may determine whether to slow down or stop. For example, if the axle is above a first threshold, the control circuit may slow the vehicle or stop providing power to the traction motor coupled to the axle above the first threshold. For example, if the axle is above a second threshold greater than the first threshold, the control circuit may cause the vehicle to brake and stop. If the axles are within the threshold, the control circuit may maintain the operation of the propulsion system.

Referring to FIG. 5 a correlation matrix 500 is illustrated that depicts the axle data of six axles. As shown, the axle data includes data from six axles. The correlation matrix includes each combination of two axles [1,1] 502, [1,2] 504, [1,3] 506, [1,4] 508, [1,5] 510, [1,6] 512, [2,1] 514, [2,2] 516 [2,3] 518, [2,4] 520, [2,5] 522, [2,6] 524, [3,1] 526, [3,2] 528, [3,3] 530, [3,4] 532, [3,5] 534, [3,6] 536, [4,1] 538, [4,2] 540, [4,3] 542, [4,4] 544, [4,5] 546, [4,6] 548, [5,1] 550, [5,2] 552, [5,3] 554, [5,4] 556, [5,5] 558, [5,6] 560, [6,1] 562, [6,2] 564, [6,3] 566, [6,4] 568, [6,5] 570, [6,6] 572. The correlation matrix includes each permutation of two axles of the vehicle. For example, as shown there are 6 axles and the permutations of two axles includes axle combinations [1,2], [1,3], [1,4], [1,5], [1,6], [2,3], [2,4], [2,5], [2,6], [3,4], [3,5], [3,6], [4,5], [4,6], and [5,6].

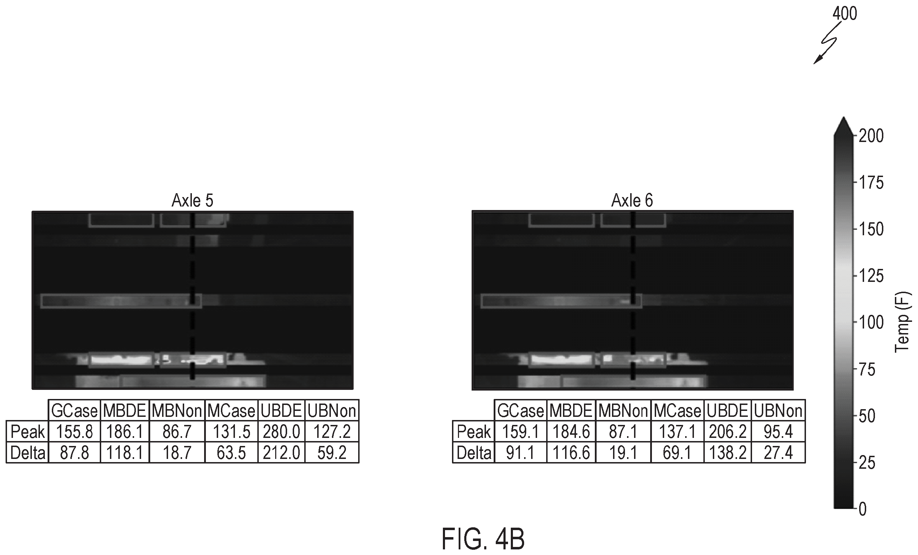

The correlation matrix may include all combinations of axles (as shown in FIG. 4). Each axle combination forms a graph. The graphs include on one axis the first axle data and on a second axis the second axle data. The graph illustrates the axle data of the two axles, such as axle 1 and axle 2. The correlation matrix includes the data from the sensors of the vehicle. The data may be indicative of the tractive effort.

Creating the correlation matrix may include determining each permutation of two axles of the vehicle. The permutations include [1,2], [1,3], [1,4], [1,5], [1,6], [2,3], [2,4], [2,5], [2,6], [3,4], [3,5], [3,6], [4,5], [4,6], and [5,6]. The control circuit may plot on a first axis, the axle data from the first axle in the permutation and plot on a second axis, the axle data from the second axle in the permutation.

FIG. 6 illustrates a confusion matrix 600, according to one embodiment of the present disclosure. The confusion matrix includes a determination of whether the axles do not have an issue (rating-1) or where the axles do have an issue (rating-9). The confusion matrix includes a prediction where the axles are predicted to not have an issue (rating-1) or where the axles are predicted to have an issue (rating-9). The matrix compares the number of axles predicted to have an issue with the axles that have an issue. The matrix compares the number of axles predicted to not have an issue with the axles that do not have an issue. The matrix compares the number of axles predicted to have an issue with the number of axles that do not have an issue, and the number of axles predicted to not have an issue with the number of axles that have an issue. The confusion matrix shows how accurately the issues with axles were predicted based on the number predicted and actually indicating an issue or not having an issue. As shown in FIG. 6, 34 axles were predicted to have an issue and actually had an issue. Eight axles were predicted to not have an issue and did not have an issue. One axle was predicted to not have an issue and did have an issue. Eleven axles were predicted to have an issue and did not have an issue.

Embodiments may be described in connection with a rail vehicle system, such as a locomotive or switcher, or other types of vehicle systems, such as automobiles, trucks (with or without trailers), buses, marine vessels, aircraft, unmanned aircraft (e.g., drones), mining vehicles, agricultural vehicles, or other off-highway vehicles. Vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers), or virtually or logically coupled but not mechanically coupled. For example, vehicles may be logically but not mechanically coupled when the separate vehicles communicate with each other to coordinate movements of the vehicles with each other so that the vehicles travel together (e.g., as a convoy, swarm, consist, platoon). Calculations and computations, such as navigation processes, may be performed on-board the vehicle systems or off-board the vehicle systems and then communicated to the vehicle systems. Whether on-board or off-board, a vehicle control system may operate a vehicle system and receive and process sensor inputs, operator inputs, operational parameters, vehicle parameters, and route parameters, etc.

The terms "control circuit" and "controller" are substitutable with each other and encompasses hardwired circuitry, programmable logic (such as microprocessors, microcontrollers, digital signal processors (DSPs), programmable logic devices (PLDs), programmable gate arrays (PGAs), or field-programmable gate arrays (FPGAs)), state machines, or firmware that executes stored instructions. Control circuits may form part of larger systems, such as integrated circuits (ICs), application-specific integrated circuits (ASICs), or systems-on-chips (SoCs), and may be found in devices such as computers, smartphones, wearable devices, and servers. These circuits may perform tasks involving data processing, communication, or data storage. Depicted components, functions, or operations may be implemented using hardware, software, firmware, or combinations of two or more thereof.

Instructions for implementing system features can be stored in various types of memory. Suitable memory may include dynamic random-access memory (DRAM), flash memory, and/or cache. These instructions can be distributed over a network or via other computer-readable media. The term "non-transitory computer-readable medium" refers to any physical medium capable of storing or transmitting instructions or information that can be read by a machine. Examples of suitable media include RAM, ROM, EPROM, EEPROM, magnetic or optical media, flash memory, or even propagated signals such as carrier waves or infrared signals.

In some embodiments, the control circuit can utilize machine learning (ML) techniques to make decisions based on sensor inputs or other data. Suitable ML methods may include supervised learning (with labeled inputs and outputs), unsupervised learning (for identifying patterns), or reinforcement learning (where the system adapts based on feedback). Suitable tasks for ML systems may involve classification, regression, clustering, anomaly detection, or optimization, with. ML may employ algorithms, such as decision trees, deep learning, support vector machines (SVMs), or neural networks being employed, depending on the application.

The system, including the control circuit or controller, may handle data generation, transmission, and storage, potentially leveraging both protected and exposed data sources. Encryption and decryption can be applied during data transit, at rest, or in use, with keys and schemas determined based on operational needs. The control circuit may monitor and enforce decision boundaries, ensuring that data from protected sources meets safety or operational thresholds. If data breaches these boundaries, the system may initiate actions such as equipment shutdown, component isolation, or transitioning to safe mode to mitigate potential risks or damages.

A suitable control circuit may incorporate a policy engine that applies specific rules based on equipment characteristics or environmental conditions. For instance, a neural network could process sensor data or operational inputs to determine appropriate actions. techniques Techniques such as backpropagation or evolutionary strategies may be used to refine neural network parameters and optimize model selection for the given task.

In one embodiment, the control circuit, (or controller), and systems described herein may use machine learning to make determinations and to enable derivation-based learning outcomes. The system may communicate with a data collection system. The control circuit may learn from, model and make decisions/determinations on a set of data (including data provided by various sensors and data collection systems) by making data-driven predictions and adapting according to available data and modeling. Machine learning may involve performing tasks using supervised learning, unsupervised learning, and reinforcement learning systems. Supervised learning may use a set of example inputs and desired outputs to the machine learning systems, where unsupervised learning may use a learning algorithm that is structuring its input with, e.g., pattern detection and/or feature learning. Reinforcement learning may perform in a dynamic environment and then provide feedback about correct and incorrect decisions. Machine learning may include tasks based on certain outputs. These tasks may be machine learning problems such as classification, regression, clustering, density estimation, dimensionality reduction, anomaly detection, and the like to include other mathematical and statistical techniques. Suitable machine learning algorithmic types may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for making determinations, calculations, comparisons and behavior analytics, and the like.

As mentioned above, the control circuit may include a policy engine. The policies the engine may apply can be based at least in part on characteristics of a given item of equipment or environment. For example, an artificial intelligence system, such as a neural network, can receive input of a number of environmental and task-related parameters. These parameters may include, for example, operational input of the given equipment, data from various sensors, environmental information, location and/or position data, and the like. The neural network can be trained and can generate an output based on these inputs, with the output representing an action or sequence of actions that the equipment or system should take to accomplish the goal of the operation. The control circuit can process the inputs through the parameters of the neural network to generate a value (i.e., make a determination) at the output node designating that action as the desired action, activity, or operating state. An action may translate into a signal that causes the vehicle to operate in a particular manner. The control circuit may accomplish this via back-propagation, feed forward processes, closed loop feedback, or open loop feedback, for example. Alternatively, rather than using backpropagation, the control circuit may use evolution strategies techniques to tune various parameters of the neural network. The control circuit may use neural network architectures that have a set of parameters representing weights of its node connections. A number of copies of this network can be generated and adjustments to the parameters can be made with subsequent simulations. Once the outputs from the various models have been obtained, they may be evaluated on their performance using a determined success metric. The best model or a good-enough model may beis selected, and the control circuit can execute that plan to achieve the desired input data to mirror the predicted 'best outcome' scenario. Additionally, the success metric itself may be a combination of the optimized outcomes, which may be weighed relative to each other. Success metrics may be dynamically established, and the process rerun and the equipment directions further modified.

In one embodiment, data can be generated, transmitted, and stored and may involve one or both of a protected space data source and the exposed space data source. The control circuit may encrypt and decrypt data as needed at rest, during use, or in transit. Encryption keys and schema may be selected and implemented as informed by end use parameters and requirements. The control circuit may evaluate and/or identify a decision boundary (that is, a boundary that separates desired behavior from undesired behavior) with regard to that data. If the control circuit determines that some quantity of data is from a protected space data source and/or is operating within determined boundaries then the control circuit, and the equipment being controlled, may operate normally. However, if the data is determined to be from an exposed space data source and/or it crosses the decision boundary, the control circuit may respond. Suitable responses may be to power down determined equipment, signal an alert, run a diagnostic routine, perform a data backup (without overwriting existing backup data), isolate equipment (including by suspending some or all communication pathways), switch equipment or control operations to a safe mode of the control system, and/or initiate a safe mode state of the equipment (e.g., slow a vehicle to a safe and controlled stop). The safe mode may be, in one embodiment, a soft shutdown mode that it intended to avoid damage or injury based on the shutdown itself and in another embodiment may be a reboot and/or minimal reload of essential drivers and functionality.

In one embodiment, vehicle systems may implement secure authentication processes, encryption protocols, and firewalls to protect against unauthorized access or spoofing. A suitable control circuit may include a security module responsible for detecting and responding to suspicious activities, such as unapproved data access attempts or irregular communication patterns. This module may employ machine learning to adapt its defense strategies, learning from previous attacks and adjusting security measures as needed to prevent similar breaches.

Vehicle systems in various embodiments may use a combination of local and remote sensors to monitor environmental conditions, vehicle status, and external inputs. These sensors may detect parameters such as speed, acceleration, braking status, location, proximity to other objects or vehicles, ambient temperature, humidity, and lighting conditions. raw data gathered by these sensors may feed into the control circuit, which in turn can respond to the input. The responses may include dynamically adjusting vehicle operations in response to real-time or near real-time changes in the environment or vehicle parameters; and, processing the data for further analysis. In certain embodiments, sensors may utilize various types of communication protocols (e.g., Bluetooth, ZigBee, Wi-Fi, or cellular networks) to share data with control systems both within the vehicle and to external data processing centers.

In certain embodiments, maintenance and diagnostic functions may be integrated into the control circuit, enabling the system to self-monitor for operational health. The control circuit may utilize diagnostic algorithms to assess the status of various vehicle components, such as engines, brakes, batteries, fuel cells and fuel systems, propulsion systems, and electronic systems (if present). If a component is found to be underperforming or at risk of failure, the control circuit may schedule alerts, recommend maintenance, or initiate safety protocols to avoid catastrophic failure. Self-diagnostics may use historical performance data to identify trends, facilitating proactive rather than reactive maintenance.

Terms such as "processing," "computing," "calculating," or "determining" refer to operations carried out by the control circuit, which may include computing systems or electronic devices that manipulate data represented as physical (electronic) quantities within memory or registers. Terms like "component," "system," and "module" refer to computer-related entities, whether hardware, software, or a combination thereof. One or more components may be described as "configured to," "configurable to," "operable/operative to," "adapted/adaptable to," or similar terms. Unless explicitly stated, these terms encompass components in both active and inactive states. Unless stated otherwise, terms like "including" or "having" should be interpreted as open-ended (i.e., "including but not limited to"). Numeric claim recitations generally mean "at least" the stated number, and disjunctive terms like "A or B" should be interpreted to include either or both unless explicitly specified. Operations in any claim may generally be performed in any order unless explicitly stated. The recitation "at least one of A, B, and C" should be interpreted as any combination of A, B, and C, such A alone, B alone, C alone, A and B together, A and C together, B and C together, and/or A, B, and C together. The recitation "at least one of A, B, or C" should be interpreted to include A alone, B alone, C alone, A and B together, A and C together, B and C together, and/or A, B, and C together.

This written description may disclose several embodiments of the subject matter, including the best mode, and may enable one of ordinary skill in the relevant art to practice the embodiments of subject matter, including making and using any devices or systems and performing any incorporated methods. The patentable scope of the subject matter may beis defined by the claims, and may include other embodiments that may occur to one of ordinary skill in the art. Such other embodiments may be intended to be within the scope of the claims if they may have structural elements that may not differ from the literal language of the claims, or if they may include equivalent structural elements with insubstantial differences from the literal languages of the claims.

## Claims

1. A method for analyzing vehicular axle dynamics, the method comprising:
obtaining axle data associated with each axle of a plurality of axles of a vehicle, wherein the axle data is indicative of tractive force;
constructing a correlation matrix comprising each unique combination of distinct axles, wherein each unique combination includes first axle data from a first axle and second axle data from a second axle;
calculating an axle correlation value for each unique axle combination;
comparing the axle correlation values for each unique axle combination with a pre-determined threshold;
assessing whether any axle correlation value for any axle within the plurality of axles falls below the pre-determined threshold, indicating a potential issue requiring further analysis or action; and
based upon detecting the potential issue, executing at least one of: (i)_ changing operation of at least one of a propulsion or a braking system of the vehicle; or (ii) designating an axle for subsequent inspection or maintenance;
wherein a control circuit performs the operations in real-time while the vehicle is in motion.

2. The method of claim 1, wherein creating the correlation matrix comprises:
determining each permutation of two axles of the vehicle;
associating, along_a first axis of the correlation matrix, the axle data from the first axle in the permutation; and
associating, along_a second axis of the correlation matrix, the axle data from the second axle in the permutation.

3. The method of claim 1 or 2, wherein the determined threshold is at least one of a correlation value or a number of lowest correlation values of the correlation values in the correlation matrix.

4. The method of claim 3, wherein the number of lowest correlation values comprises either a minimum correlation value or a next to minimum correlation value of correlation values in the correlation matrix.

5. The method of any of claims 1 to 4, comprising:
determining the axle has an issue; and
cross-verifying results of the axle assessment and determination to determine if the assessment was accurate.

6. The method of any one of claims 1 to 5, comprising receiving the axle data in real-time while the vehicle is in motion along a route, and wherein the executing step is performed without operator intervention.

7. The method of any one of claims 1 to 6, wherein calculating the axle correlation value comprises applying at least one of Pearson correlation, Kendall rank correlation, Spearman correlation, or Point-Biserial correlation to the first axle data and the second axle data.

8. The method of any one of claims 1 to 7, wherein executing changing operation of the braking system comprises: slowing the vehicle when the axle correlation value falls below a first threshold; and braking the vehicle to a stop when the axle correlation value falls below a second threshold less than the first threshold.

9. The method of any one of claims 1 to 8, further comprising cross-verifying whether the axle correlation value assessment correctly identifies the potential issue by comparing a predicted issue determination against a historical issue record using a confusion matrix.

10. A system for analyzing vehicular axle dynamics, the system comprising:
a sensor to generate a signal indicative of a tractive force of each axle of a plurality of axles of a vehicle;
a converter circuit to convert the signal into axle data, wherein the axle data is stored in a first memory;
a control circuit coupled to the first memory and a second memory, wherein the second memory stores instructions executable by the control circuit to cause the control circuit to:
fetch the axle data from the first memory;
construct a correlation matrix for each unique combination of two distinct axles, wherein each unique combination includes first axle data from a first axle and second axle data from a second axle;
calculate an axle correlation value for each unique axle combination;
compare the axle correlation values for each unique axle combination with a pre-determined threshold;
assess whether any axle correlation value for any axle within the plurality of axles falls below the pre-determined threshold, indicating a potential issue requiring further analysis or action; and
based upon detecting the_potential issue, execute at least one of: (i) change operation of at least one of a propulsion or braking system of the vehicle; or (ii)
designate an axle for subsequent inspection or maintenance;
wherein the control circuit is configured to perform the operations in real-time while the vehicle is in motion.

11. The system of claim 10, wherein the sensor is disposed on at least one of the vehicle, a wayside device remotely located from the vehicle, or a combination thereof.

12. The system of claim 10 or 11, further comprising a second sensor wherein the second sensor is a thermal sensor to measure temperature changes on the axle.

13. The system of claim 12, wherein the thermal sensor comprises_an infrared sensor and the axle data further includes infrared imaging data.

14. The system of any of claims 10 to 13, wherein the axle comprises a plurality of components and the axle data comprises data for at least one of the plurality of components.

15. The system of any one of claims 10 to 14, wherein the control circuit is configured to:
determine whether the temperature of an axle exceeds a temperature threshold; and
based on the temperature exceeding a threshold, determining whether a correlation value of an axle of the plurality of axles is below a threshold.

16. The system of claim 15, further comprising a temperature sensor on the vehicle, wherein the threshold is a temperature value.

17. The system of claim 15 or 16, further comprising a temperature sensor disposed on a wayside device, wherein the threshold is a temperature value.

18. The system of any one of claims 10 to 17, wherein creating the correlation matrix comprises:
determining each permutation of two axles of the vehicle;
associating, along a first axis of the correlation matrix, the axle data from the first axle in the permutation; and
associating, along a second axis of the correlation matrix, the axle data from the second axle in the permutation.

19. The system of any one of claims 10 to 18, wherein the determined threshold is at least one of a correlation value or a number of lowest correlation values of the correlation values in the correlation matrix.

20. The system of claim 19, wherein the number of lowest correlation values comprises either a minimum correlation value or a next to minimum correlation value of correlation values in the correlation matrix.

21. A method for analyzing vehicular axle dynamics, the method comprising:
obtaining temperature values associated with each axle of a plurality of axles of a vehicle;
determining whether the temperature value of each axle exceeds a temperature threshold;
obtaining axle data associated with each axle of a plurality of axles of a vehicle, wherein the axle data is indicative of tractive force;
constructing a correlation matrix comprising each unique combination of distinct axles, wherein each unique combination includes first axle data from a first axle and second axle data from a second axle;
calculating an axle correlation value for each unique axle combination;
comparing the axle correlation values for each unique axle combination with a pre-determined threshold;
based on the temperature value of an axle exceeding the temperature threshold, assessing whether any axle correlation value for any axle exceeding the temperature threshold falls below the pre-determined threshold, indicating a potential issue requiring further analysis or action; and
based upon detecting the potential issue, executing at least one of:_(i) changing operation of at least one of a propulsion or braking system of the vehicle; or (ii) designating an axle for subsequent inspection or maintenance;
wherein the control circuit performs the operations in real-time while the vehicle is in motion.

22. The method of claim 21, wherein creating the correlation matrix comprises:
determining each permutation of two axles of the vehicle;
plotting on a first axis, the axle data from the first axle in the permutation; and
plotting on a second axis, the axle data from the second axle in the permutation.

23. The method of claim 22, wherein the determined threshold is at least one of a correlation value or a number of lowest correlation values of the correlation values in the correlation matrix.

24. The method of claim 23, wherein the number of lowest correlation values comprises either a minimum correlation value or a next to minimum correlation value of correlation values in the correlation matrix.
